# EUROPÄISCHE PATENTANMELDUNG

(11) **EP 0 709 299 A1**
(43) Veröffentlichungstag der Anmeldung: **01.05.1996**
(21) Anmeldenummer: 94890185.5
(22) Anmeldetag: 28.10.1994
(51) Int. Cl.: B65D 6/00, B65D 21/032

(54) **Mehrfach verwendbarer Verpackungsbehälter**

(71) Anmelder: KE-KELIT Kunststoffwerk Gesellschaft m.b.H., A-4017 Linz (AT)
(72) Erfinder: Egger, Karl, A-4203 Altenberg (AT)
(74) Vertreter: Hübscher, Heiner, Dipl.-Ing.

(57) **Zusammenfassung**

Ein Verpackungsbehälter in Form eines geraden Prismas soll mehrfach verwendbar sein, und im Leerzustand bzw. beim Transport den geringsmöglichen Raum beanspruchen. Zu diesem Zweck besteht der Behälter aus zwei gleichen Teilen (1, 2), die sich jeweils aus einer quadratischen oder gegebenenfalls regelmäßig sechseckigen Stirnplatte (3; 14) und zwei bzw. drei mit dieser starr verbundenen unmittelbar aneinander stoßenden Längswänden (4, 5; 4a, 5a) zusammensetzen. Die Ränder der Stirnplatte (3; 14) und der Längswände (4, 5; 4a, 5a) sind in Gehrung einwärts abgefast.

## Beschreibung

Die Erfindung betrifft einen mehrfach verwendbaren Verpackungsbehälter in Form eines geraden Prismas.

Derartige Behälter, die hauptsächlich zum Versand und Schutz länglichen Gutes, z. B. von Rohrabschnitten od. dgl., verwendet werden, bestehen bisher in Kistenform aus zwei Stirnflächen und aus diese an drei Seiten verbindenden Längswänden sowie aus einem entsprechenden Deckel. Für den Versand sind sie zwar voll geeignet, sie haben aber den Nachteil, daß sie sich nicht ineinander schachteln lassen, daß sie also beim Rücktransport als Leergut ebenso viel Raum benötigen wie beim Versand selbst. Beim Rücktransport als Leergut könnte aber sehr viel Transportraum eingespart werden, zumal die Behälter auch keine Schutzfunktion zu erfüllen brauchen. Außerdem können die bisherigen Verpackungsbehälter dieser Art nicht zu einer Stellage od. dgl. gestapelt bzw. verbunden werden.

Der Erfindung liegt die Aufgabe zugrunde, diese Mängel zu beseitigen und einen einfachen Verpackungsbehälter zu schaffen, der die Ware beim Transport wie eine Kiste aufnimmt, für den Leertransport aber beträchtlich weniger Raum beansprucht und sich auch zu Stellagen od. dgl. zusammenfügen läßt.

Die Erfindung löst die gestellte Aufgabe dadurch, daß der Behälter aus zwei gleichen Teilen besteht, die sich jeweils aus einer quadratischen oder gegebenenfalls regelmäßig sechseckigen Stirnplatte und zwei bzw. drei mit dieser starr verbundenen unmittelbar aneinanderstoßenden Längswänden zusammensetzen, wobei die freien Ränder der Stirnplatte und der Längswände in Gehrung einwärts abgefast sind.

Da der erfindungsgemäße Verpackungsbehälter aus zwei gleichen Teilen besteht, ist seine Herstellung vereinfacht, wobei jeder Teil etwa rinnenförmig mit einer Stirnplatte ausgebildet ist, so daß sich die Behälter auf Lager oder im Leertransport wie Rinnen ineinanderschachteln lassen und daher wenig Raum beanspruchen. Durch die in Gehrung abgefasten Ränder werden Überstände beim Zusammenbau der beiden Teile vermieden, d. h. die beiden Behälterteile lassen sich für den Transport zu einem Prisma ohne Vorsprünge, Versetzungen od. dgl. zusammenschließen.

Die Behälterteile können aus einem Polyurethan- oder Polystyrolschaumstoff in einem Holz entsprechenden Härtebereich bestehen. Es ist aber auch möglich, daß die Behälterteile in Sandwichbauweise mit einer zelligen Kernschicht und stabilen Deckschichten ausgebildet werden oder aus mehreren miteinander fest verbundenen Hohlkammerprofilen bestehen. Wesentlich ist, daß die Behälterteile eine genügende Festigkeit bzw. Starrheit besitzen und die Längswände mit der Stirnplatte starr und fest verbunden sind.

Um leicht beschädigbare Kanten, die durch die Gehrungsabfasung entstehen würden zu vermeiden, sind die Gehrungsschrägflächen an den Außenrändern abgerundet.

Die Gehrungsabfasung der Ränder der Behälterteile geben aber auch eine günstige Möglichkeit, die aneinander stoßenden Ränder der Längswände mit den aneinander stoßenden Rändern der Stirnplatte und der Längswände des zugehörigen zweiten Behälterteiles beim Zusammenbau zu verbinden. Zu diesem Zweck erhalten die Gehrungsschrägflächen zu ihnen normale, Bolzen, vorzugsweise Schraubenbolzen, aufnehmende Bohrungen oder schwalbenschwanzförmige Nuten od. dgl. für eine einsteckbare Feder. Es können auch in den Schrägflächen Ausnehmungen vorhanden sein, um elastische Verbinder einführen zu können. Die Federprofile in den schwalbenschwanzförmigen Nuten bringen nicht nur die Verbindung der Behälterteile an den Rändern mit sich sondern stellen bei den Längswänden auch günstige Verstärkungen dar.

Um die jeweils für ein quadratisches Prisma ausgebildeten Behälterteile zu einer Stellage zusammenschließen zu können, weisen die quadratischen Stirnplatten an der Ecke an der die Längswände zusammenstoßen, und an der diammetral gegenüberliegenden Ecke in der Platten ebene liegende Bohrungen für Verbindungsbolzen auf, so daß einzelne Behälterteile mit unter 45° geneigten und so eine oben offene Rinne bildenden Längswänden übereinandergesetzt und an den Ecken der Stirnplatten verbunden werden können.

Dabei ist es besonders zweckmäßig, wenn die Bohrungen in den Plattenecken eine verschiedene Tiefe aufweisen, und die Verbindungsbolzen durch einen Bund od. dgl. in den beiden Tiefen entsprechende Längsabschnitte unterteilt sind. Damit nämlich eine an den beiden Enden mit stehenden und die einzelnen Behälterteile als Stellage zusammenhaltenden Stützen hergestellt werden kann, werden die einzelnen Behalterfächer jeweils aus zwei so ineinander geschachtelten Behälterteilen gebildet, daß die Stirnplatten der ineinandergeschachtelten Behälterteile an verschiedenen Seiten angeordnet sind. Daraus ergibt sich aber zufolge der Dicke jedes betreffenden Behälterteiles im Bereich des Rindenscheitels ein verschieden großer Abstand, der übereinander stehende Stirnplatten zweier Rinnenfächer an der einen und der anderen Seite. Diese beiden verschiedenen Abstände werden durch die verschiedenen Tiefen der Bohrungen in den Plattenecken und die verschieden langen Längsabschnitte der Verbindungsbolzen berücksichtigt. Es ist also erfindungsgemäß möglich mehrere Behälterteile in V-Form und sich auf den Stirnplatten abstützend zu einer Stellage zusammenzusetzen. Die aus den rinnenförmigen Behälterteilen zusammengestellte Stellage kann selbstverständlich auf einer Grundplatte montiert werden, um ihr eine entsprechende Standfestigkeit zu verleihen.

Es ist auch möglich, die quadratischen Stirnplatten an zwei benachbarten Rändern in der Plattenebene vorragende Nasen od. dgl. und an den jeweils gegenüberliegenden Rändern konforme Vertiefungen vorzusehen, um ein gegenseitiges Verschieben der Verpackungsbehälter in einem Stapel zu verhindern. Mit den Nasen od. dgl. bzw. Vertiefungen ist es auch möglich, eine Stellage aufzubauen, die aus Behälterteilen mit waagrechten bzw. senkrechten Längswänden, also waagrechten Fachböden bestehen.

In der Zeichnung ist der Erfindungsgegenstand beispielsweise schematisch dargestellt. Es zeigen
- Fig. 1: einen Teil eines quadratisch-prismatischen Behälters im Schaubild,
- Fig. 2: einen aus zwei solchen Behälterteilen zusammengesetzten Behälter durchschnitten, ebenfalls im Schaubild,
- Fig. 3 bis 5: verschiedene Verbindungsmöglichkeiten der Behälterteile im Querschnitt
- Fig. 6: die Zusammenschachtelung leerer Behälterteile im Schaubild,
- Fig. 7: einen sechseckig-prismatischen Behälter im Querschnitt,
- Fig. 8: die beiden den Behälter nach Fig. 7 bildenden Behälterteile zusammengeschachtelt ebenfalls im Schnitt,
- Fig. 9: einen Teil eines Behälterteiles nach Fig.1 im Schaubild,
- Fig. 10: einen Bolzen zum Zusammenbau rinnenförmig übereinander gestellter Behälterteile zu einer Stellage in Ansicht,
- Fig. 11: eine solche Stellage in Seitenansicht und
- Fig. 12: übereinander gesetzte Behälterteile deren Stirnflächen mit vorspringenden Nasen und Vertiefungen versehen sind in Ansicht.

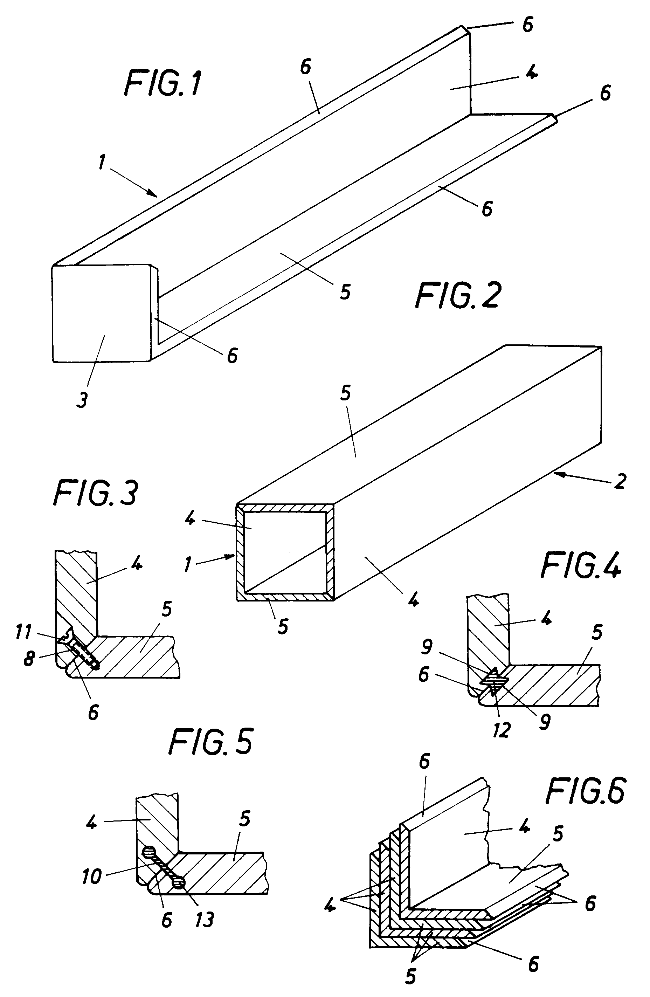

Ein erfindungsgemäßer Verpackungsbehälter besteht aus zwei gleichen Teilen 1 und 2 die sich aus einer quadratischen Grundplatte 3 und zwei mit dieser starr verbundenen unmittelbar aneinander stoßenden Längswänden 4, 5 zusammensetzt. Wie insbesondere aus den Fig. 3 - 5 ersichtlich, sind die freien Ränder der Stirnplatte 3 und der Längswände 4, 5 in Gehrung einwärts abgefast, wobei die Gehrungsschrägflächen 6 zu diesen normalen Bohrungen 8, schwalbenschwanzförmige Nuten 9 oder sonstige Ausnehmungen 10 aufweisen, in die Verbindungselemente, wie Schrauben 11, doppelschwalbenschwanzförmige Stäbe 12 oder elastische Verbinder 13 eingesetzt sind.

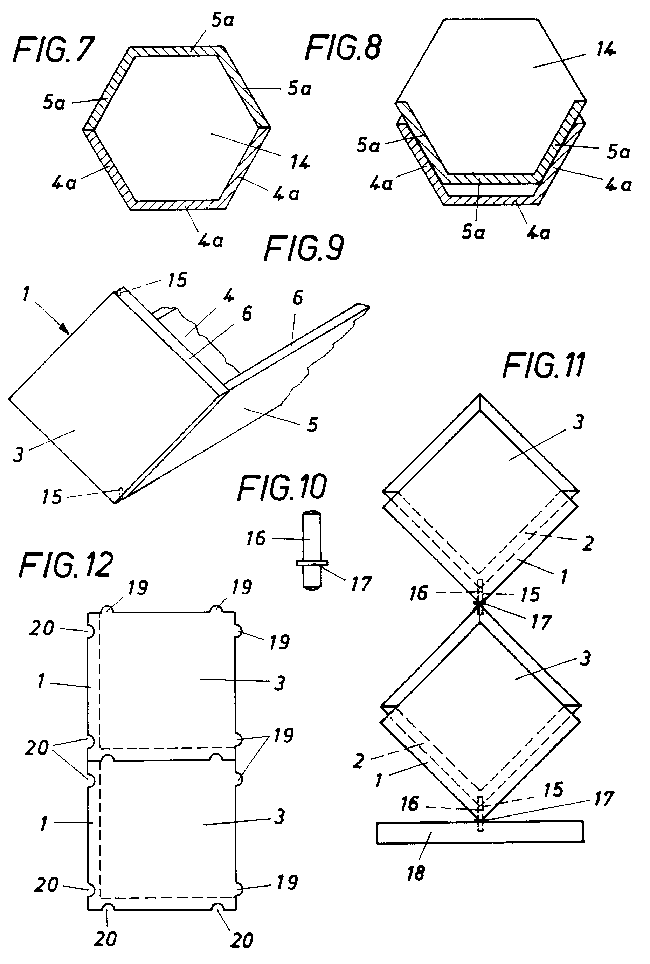

Wie die Fig. 7 und 8 zeigen, könnte der Verpackungsbehälter auch mit sechseckigen Stirnplatten 14 und drei entsprechenden Längswänden 4a, 5a ausgestattet sein.

Der Verpackungsbehälter nach Fig. 9 weist in seiner quadratischen Stirnplatte 3 an der Ecke, an der die Langswände 4, 5 zusammenstoßen sowie an der diammetral gegenüberliegenden Ecke in der Plattenebene liegende Bohrungen 15 auf, die verschiedene Tiefen aufweisen und für Verbindungsbolzen 16 bestimmt sind. Die Bolzen 16 sind durch einen Bund 17 in den beiden Tiefen der Bohrungen 15 entsprechende Längsabschnitte unterteilt.

Gemäß Fig. 11 wird aus mehreren übereinandergesetzten Behälterteilen eine Stellage gebildet, wobei jedes Behälterfach aus zwei jeweils verkehrt ineinander gesteckten Behälterteilen 1, 2 besteht, so daß an jeder Seite der Behälterteile 1, 2 bzw. der Stellage Stirnplatten 3 vorgesehen sind. Um den sich aus der Materialstärke im Eckenbereich durch die ineinander Schachtelung zweier Behälterteile 1, 2 ergebenden Höhenunterschiede auszugleichen, sind die Bohrungen 15 von ungleicher Tiefe und die Verbindungsbolzen 16 durch den Bund 17 in den beiden Tiefen entsprechende Längsabschnitte unterteilt. Mit 18 ist eine Grundplatte für die gebildete Stellage bezeichnet. Selbstverständlich können auch andere Stützvorrichtungen zur Stabilisierung der gebildeten Stellage vorgesehen sein.

Nach Fig. 12 stehen die Behälterteile 1 waag- bzw. senkrecht übereinander, wobei die Stirnplatten 3 an zwei benachbarten Wänden in der Plattenebene vorragende Nasen 19 und an den jeweils gegenüberliegenden Rändern konforme Vertiefungen 20 aufweisen.

Es überschreitet nicht den Rahmen der Erfindung, wenn die Einzelbehälter oder die gebildeten Stellagen durch sie umfassende Stahlbänder od. dgl. zusätzlich zusammengehalten werden.

## Patentansprüche

1. Mehrfach verwendbarer Verpackungsbehälter in Form eines geraden Prismas, dadurch gekennzeichnet, daß der Behälter aus zwei gleichen Teilen (1, 2) besteht, die sich jeweils aus einer quadratischen oder gegebenenfalls regelmäßig sechseckigen Stirnplatte (3, 14) und zwei bzw. drei mit dieser starr verbundenen, unmittelbar aneinanderstoßenden Längswänden (4, 5; 4a, 5a) zusammensetzen, wobei die freien Ränder der Stirnplatte (3; 14) und der Längswände (4, 5; 4a, 5a) in Gehrung einwärts abgefast sind.

2. Verpackungsbehälter nach Anspruch 1, dadurch gekennzeichnet, daß die Behälterteile (1, 2) aus einem Polyurethan- oder Polystyrolschaumstoff in einem Holz entsprechenden Härtebereich bestehen.

3. Verpackungsbehälter nach Anspruch 1, dadurch gekennzeichnet, daß die Behälterteile (1, 2) in Sandwichbauweise mit einer zelligen Kernschicht und stabilen Deckschichten ausgebildet sind.

4. Verpackungsbehälter nach Anspruch 1, dadurch gekennzeichnet, daß die Behälterteile (1, 2) aus mehreren miteinander fest verbundenen Hohlkammerprofilen bestehen.

5. Verpackungsbehälter nach einem der Ansprüche 1 - 4, dadurch gekennzeichnet, daß die Gehrungsschrägflächen (6) an den Außenrändern abgerundet sind (Fig. 3 - 5).

6. Verpackungsbehälter nach den Ansprüchen 1 und 5, dadurch gekennzeichnet, daß zur Verbindung der Behälterteile (1, 2) an den Gehrungsschrägflächen (6) zu diesen normale, Bolzen (11) aufnehmende Bohrungen (8), schwalbenschwanzförmige Nuten (9) für einsteckbare Federn (12) od. dgl. vorgesehen sind.

7. Verpackungsbehälter nach einem der Ansprüche 1 - 6, dadurch gekennzeichnet, daß die quadratischen Stirnplatten (3) an der Ecke, an der die Längswände (4, 5) zusammenstoßen und an der diametral gegenüberliegenden Ecke in der Plattenebene liegende Bohrungen (15) für Verbindungsbolzen (16) aufweisen.

8. Verpackungsbehälter nach Anspruch 7, dadurch gekennzeichnet, daß die Bohrungen (15) in den Plattenecken eine verschiedene Tiefe aufweisen und die Verbindungsbolzen (16) durch einen Bund (17) od. dgl. in den beiden Tiefen entsprechende Längsabschnitte unterteilt sind.

9. Verpackungsbehälter nach einem der Ansprüche 1 - 6, dadurch gekennzeichnet, daß die quadratischen Stirnplatten (3) an zwei benachbarten Rändern in der Plattenebene vorragende Nasen (19) od. dgl. und an den jeweils gegenüberliegenden Rändern konforme Vertiefungen (20) aufweisen (Fig. 12).

10. Verpackungsbehälter nach einem der Ansprüche 1 - 9, dadurch gekennzeichnet, daß mehrere Behälterteile (1, 2) in V-Form und sich auf den Stirnplatten (3) abstützend zu einer Stellage zusammensetzbar sind. (Fig. 11)
